(19) Europäisches Patentamt
European Patent Office
Office européen des brevets

(11) **EP 4 682 488 A1**

(12) **EUROPEAN PATENT APPLICATION**

(43) Date of publication:
**21.01.2026 Bulletin 2026/04**

(21) Application number: **24189894.9**

(22) Date of filing: **19.07.2024**

(51) International Patent Classification (IPC):
**G01J 3/02** (2006.01)  **G01J 3/10** (2006.01)
**G01J 3/42** (2006.01)

(52) Cooperative Patent Classification (CPC):
**G01J 3/108; G01J 3/0286; G01J 3/42;**
G01J 2003/102; G01N 21/3504; G01N 2021/1704;
G01N 2201/06186; G01N 2201/0695

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **4K-MEMS SA
2072 St-Blaise (CH)**

(72) Inventors:
• **IMBODEN, Matthias
2072 St-Blaise (CH)**
• **STANLEY, Ross
1066 Epalinges (CH)**

(74) Representative: **P&TS SA (AG, Ltd.)**
**Avenue J.-J. Rousseau 4**
**P.O. Box 2848**
**2001 Neuchâtel (CH)**

(54) **THERMAL SOURCE OF INFRARED AND VISIBLE LIGHT**

(57)    A MEMS thermal radiation source (150) comprising, in a package, a plate (30) and one heater or a plurality of heaters (342) configured to heat the plate (30) to an emission temperature such that an emitted radiation ($I(\lambda)$) of the plate and is available outside the package, characterised by a reference radiation detector (110) receiving a part of the emitted radiation ($I(\lambda_0)$) and providing a reference intensity signal indicative of an intensity of the emitted radiation ($I(\lambda)$).

Fig. 6

EP 4 682 488 A1

## Description

## Technical domain

The invention relates to the field of infrared emitters, and especially to microelectromechanical devices (MEMS) that emit infrared and/or visible light through a thermal process.

## Related art

Often there is a need for radiation sources in the infrared or visible spectrum that are constant and reproducible in intensity. Such references are useful, for example, in calibrating of optical thermometers, pyrometers, radiometers, spectrometers, and in many other applications.

Spectral measurement techniques are based on the principle that, when light with a certain range of wavelengths interacts with a sample, the radiation transmitted or reflected or scattered from the sample carries, in its spectrum, a signature of the material in the sample itself. Infrared radiation has the right energy to excite vibration and rotation states of many significant molecules and can be used to detect and analyse quantitatively these chemical species.

A common concern of spectral measurements is that of the stability and reproducibility of the radiation source. Many known emitters of infrared radiation have been used in this context in the art. LED emitters are readily available, are reliable, and provide excellent efficiency. On the other hand, LED sources have an emission spectrum that depends on junction temperature, drive current, voltage, and age. The production spread of their spectra can also be considerable.

Phosphor-based LED sources are somewhat more consistent in their emission spectra, but still present the same shortcomings. Age-related drift is difficult to quantify and compensate.

Thermal sources like tungsten light bulbs have long been used as emitters of visible and infrared radiation. Filament aging is a highly nonlinear process, and these sources have their own special problems such evaporation of tungsten onto windows.

MEMS thermal emitters are a known alternative to conventional light bulbs. Yet, they may also show ageing effect and are sensitive to environmental changes. The spectral radiance of such a source is entirely determined, through Planck's law, by its temperature and its coefficient of optical emissivity.

Advantageously, thermal sources emit broadband radiation covering the infrared spectrum between $\lambda=1$ $\mu$m and $\lambda=5$ $\mu$m, where many significative molecular lines are found. Spectral measurement can be taken at one single wavelength, for example tuned to a peak in the absorbance or the reflectance of a substance that is sought-for example the 4.3 $\mu$m absorbance peak of $CO_2$-or over a range of different wavelengths. In the latter case one distinguishes also between dispersive measurements, in which the radiation to be analysed is decomposed into a continuous spectrum by a dispersive element, and nondispersive methods that rely on one or a few monochromatic or narrowband components. Detectors for infrared light in the region between $\lambda=1$ $\mu$m and $\lambda=5$ $\mu$m include lead selenide (BPS) and lead sulphide (PbS) devices.

It is known to measure a transmittance of a sample at a wavelength tuned to a characteristic transition of a sought substance and at a nearby wavelength where no special interaction is expected, and to use the information from the latter as a reference. For example, known nondispersive $CO_2$ measurement methods take a measurement of transmittivity of a cell filled with the gas under study at 4.3 $\mu$m, corresponding to a vibration mode of the $CO_2$ molecule, and at 3.9 $\mu$m. The intensity ratio can be used to determine $CO_2$ concentration. This method can compensate for uncontrolled changes in the overall radiance of the source but is not effective in presence of changes in the spectrum shape.

Photoacoustic sensing has received much attention in the field of gas analysis. Infrared radiation absorbed by the sample is converted into acoustic waves that are detected with a microphone. This technique can achieve favourable signal-to-noise ratios through use of acoustic resonance, synchronous detection, and high-performance MEMS microphones; nevertheless, the stability of the infrared source directly affects the accuracy and reliability of the measurement.

MEMS micro-hotplates in applications such as spectroscopy, gas sensing and the like are described, for example, by WO 2021/144463.

## Short disclosure of the invention

An aim of the present invention is the provision of a radiation source and a method of using a thermal radiation source to measure a sample overcoming the shortcomings and limitations of the state of the art.

According to the invention, these aims are attained by the object of the attached claims, and in particular by a thermal radiation source comprising a plate and one heater or a plurality of heaters configured to heat the plate to an emission temperature such that an emitted radiation is emitted from the plate and, characterised by a reference radiation detector receiving a part of the emitted radiation and providing a reference intensity signal indicative of an intensity of the emitted radiation.

The invention comprises also a method of analysing a sample with infrared radiation, comprising: providing a thermal radiation source, heating a plate of the thermal radiation source at an emission temperature such that an emitting surface of the plate radiates infrared radiation on the sample, determining a desired characteristic of the sample based on an interaction of the sample with part of the infrared radiation having wavelengths in an interaction band, characterised in that part of the thermal radiation is directed to a reference radiation detector that is responsive to wavelengths outside the interaction band, and in that the reference radiation detector provides a reference intensity signal indicative of an intensity of the radiation.

Dependent claims relate to features of the invention that, while important and useful, are not essential, such as the choice, for the reference radiation detector of a sensitivity limited or extending wavelengths shorter than a peak wavelength of the emission spectrum. The sensitivity of the reference detector may be limited, for example, to the range $\lambda < 1700$ nm or else $\lambda < 1200$ nm. In these wavelength ranges, many solid-state radiation detectors are available including, among others, Silicon photodiodes, Germanium photodiodes and InGaAs photodiodes. All these are applicable to the invention.

The radiation source of the invention may assume any suitable form or nature but, in favourable embodiments, it may be a hot plate in a MEMS device enclosed in a package with a window at least partly transparent to the emitted radiation. It may be advantageous, in embodiments, to suspend the hot plate to the heaters themselves, and back it with a reflector that increases the overall efficiency.

The reference detector may be placed in different positions with respect to the radiation source. In some embodiments, the radiation source sits above the reference detector, and the latter sees a part of the radiation emitted from a lower surface of the plate. The reflector, if present, may have a small aperture to this effect. In other embodiments, the reference detector may be placed on a side and receive stray radiation diffused from an edge of the radiation source.

The radiation source of the invention may comprise control circuit configured to stabilise the reference intensity signal to a predetermined level by controlling a heating power, and in this mode stabilising the emission temperature, the intensity, and the spectral distribution of the emitted radiation.

A method of analysing a sample (120, 125) with infrared radiation, comprising: providing a thermal radiation source (150), heating a plate (30) of the thermal radiation source (150) at an emission temperature such that an emitting surface of the plate radiates infrared radiation on the sample (120, 125), determining a desired characteristic of the sample based on an interaction of the sample with the infrared radiation, characterised in that part of the thermal radiation is directed to a reference radiation detector (110) without interacting with the sample (120, 125), and in that the reference radiation detector (110) provides a reference intensity signal indicative of an intensity of the radiation.

Concerning the method, the sample may be characterised through an analysis of a radiation (reflected, transmitted or scattered) emerging from the sample, by one or more infrared radiation detectors and, optionally bandpass filters. In alternative, the characterisation may use a photoacoustic effect, in which the incident radiation is converted into a sound signal.

The invention uses the fact that the emission spectrum of blackbody emitters is accurately described by the Planck's law that depends on a single parameter: the temperature, corrected to account for the geometric etendue of the emitter, which can be characterised quite nicely.

In a perfect blackbody emitter of known temperature, the intensity of the radiation at one arbitrary wavelength is sufficient to determine the spectral intensity at any other wavelength of the spectrum. Even if the temperature is not precisely known, it is sufficient to keep the spectral intensity constant at any one given wavelength to ensure that the intensity everywhere in the emission spectrum.

The same conclusion applies to real thermal sources having an emissivity $\varepsilon(\lambda, T)$ lower than one, provided the temperature of the source is essentially uniform. Under these conditions, the spectrum is again described by Planck's law with the wavelength-dependent emissivity as a correction factor. The consequence is that, if the temperature $T$ and the emissivity are known, the emission spectrum can be entirely determined by the intensity at any given wavelength $\lambda_0$. Moreover, under reasonable hypothesis on the dependence of $\varepsilon$ on the temperature, the spectral shape and the spectral intensity can again be kept constant simply by keeping constant the intensity at one wavelength $I(\lambda_0)$.

If the goal is that of stabilising the spectrum and the intensity, a narrowband measurement of the reference intensity $I(\lambda_0)$ is not required. The same result can be achieved by keeping constant the integrated intensity in a band of wavelengths, provided the responsivity of the reference detector, as well as the absorbance in the optical path between the source and the reference detector in this band can be considered constant.

Micro-plate MEMS emitter exhibit a remarkable uniformity of temperature and, thanks to their simple structure, do not noticeably age; therefore, they can be controlled and stabilised effectively by the invention.

Another remarkable aspect of the invention is that, thanks to the universality of Planck's law, the reference wavelength $\lambda_0$ and can be quite far away from the peak emission of the spectrum and from the measurement wavelength. To provide an example, a thermal detector at a $T \approx 2000$ K would be a perfectly valid source of $\lambda = 4.3$ μm IR radiation, for $CO_2$ detection; however, it can be controlled and stabilised by keeping constant the emission at $\lambda \approx 0.8$ μm, between NIR and the visible spectrum. This opens the possibility of using a silicon photodiode or a detector of visible light to monitor the emission $I(\lambda_0)$.

Highly sensitive silicon photodetectors are available at rather low costs and using a silicon photodiode in the reference measurement has undeniable economic advantages. It has also unexpected technical positive effects, however. The emission of a blackbody at 2000 K and the responsivity of silicon photodiode overlaps in a wavelength range 0.85-1.1 $\mu$m roughly. This interval is at the extreme longwave limit of the sensitivity of silicon photodetectors and is way below the peak of a blackbody at 2000 K. The intensity in this region of spectrum is roughly proportional to $T^6$, which gives us an excellent control on the emitter's temperature. Concretely, if the signal from the photodiode is stabilised to 0.1 %-a realistic target-the temperature variation interval would be 0.0017%. This translates into a temperature of $2000 \pm 0.3$ K, which is remarkably stable. The invention may, in embodiment, take advantage of the nonlinear relationship between temperature and intensity at short wavelength to achieve a very high sensitivity of the control loop and an excellent temperature stability.

The emission of the same thermal source at 4.3 $\mu$m approximately varies proportionally to $T^2$. Any temperature fluctuation will reflect on the reference channel at 0.8 $\mu$m much more than at the measurement channel at 4.3 $\mu$m. This means that the intensity at the wavelength of interest can be stabilised very effectively.

Since, as mentioned above, the responsivity of conventional silicon photodetectors overlaps only slightly with the emission of a thermal source at 2000 K. This combination provides naturally a measurement of the reference intensity in a rather narrow band $0.85 < \lambda < 1.1$ $\mu$m. A narrower bandwidth could be obtained by suitable optical filters. The principle of the invention does not require a narrow-band measurement, however, and the reference detector could also be a Ge photodiode, or a InGaAs photodetector, whose responsivity overlaps more with the Planck's emission spectrum at 2000 K. In this case also, optical filters could be used to restrict the bandwidth of the reference measurement. This may be advantageous, for example, to exclude parts of the spectrum that may be affected by environmental factors.

In other words, a thermal infrared source used in an experiment or in a measurement in a determined interaction band of wavelengths can be stabilised effectively through a reference signal taken at a different band of wavelengths. The interaction band and the band used to generate the reference signal may overlap in part or be totally separate. In many important use cases, the short-wavelength part of the Planck's distribution shows the strongest temperature dependence and can be used very effectively to stabilise the emission in the spectral band relevant for the interaction that is studied.

**Short description of the drawings**

Exemplar embodiments of the invention are disclosed in the description and illustrated by the drawings in which:

Figure 1 illustrates schematically a measurement process using an infrared source according to the invention.

Figure 2 illustrates schematically a photoacoustic detection process using the inventive source and methods.

Figure 3 illustrates a variant of the invention in which a reference sensor is placed after the sample cell.

Figure 4 illustrates a possible structure of a MEMS hot plate used in the invention, and

Figure 5 illustrates another structure of the same with flexures in the heating support arms.

Figure 6 shows, in cross section, a possible arrangement of a source according to the invention, and

Figure 7 illustrates an alternative arrangement.

Figure 8 plots Planck distributions at 1500 K and at 2000 K as well as their temperature derivatives

Figure 9 plots the product between the responsivity and the Planck distributions at 1500 K and 2000 K along with the temperature derivatives of the Planck distribution.

Figure 10 is a plot of the ratio between the temperature derivative of the Planck distribution at two selected wavelengths, as a function of the temperature.

Figure 11 is a simplified schematic illustrating the general structure of a control unit used in the invention.

Figure 12 is a bidimensional representation of the relative temperature sensitivity of the Planck distribution as a function of the reference wavelength and temperature, for a measurement at $\lambda = 4.3$ $\mu$m.

Figure 13 is a bidimensional plot of the relative temperature sensitivity of the Planck as a function of the reference wavelength $\lambda_{ref}$ and of the measurement wavelength $\lambda$, for T = 2500 K.

Figure 14 is a simplified representation of a multichannel spectral emitter based on the invention.

Figure 15 is a variant of the emitter of figure 14 with a common multiplexed reference measurement.

**Examples of embodiments of the present invention**

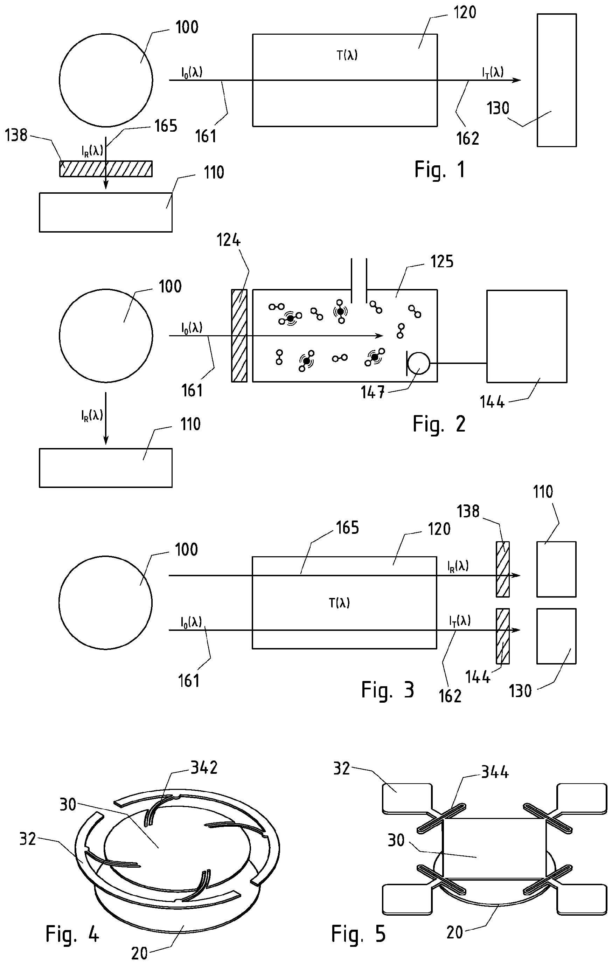

**Figure 1** shows a measurement method in which a sample is analysed spectrally by infrared radiation. The figure relates to a transmission experiment, and the present disclosure will deal with this kind of measurement, mostly, for brevity. It should be noted that the invention applies as well to measures where the infrared radiation is reflected or scattered or interact with the sample in other ways. The example relates to the analysis of a fluid sample, for example a gas analysis, but the invention applies also to measures of solid and liquid samples, and can be used to analyse spectrally complex structures, such as multilayer samples, biological samples and so on.

In figure 1, **100** represents a MEMS micro-plate infrared source emitting radiation (arrow 161) with spectral intensity $I_0(\lambda)$ that, starting from the source **100** enters the cell **120** containing and a sample with transmissivity $T(\lambda)$. The radiation emerging from the cell impinges (arrow 162) on the infrared detector **130** with a modified spectral intensity $I_T(\lambda)$. This measurement may use a filter to allow only the radiation in a selected spectral band to reach the detector **130,** for example a passband filter (not shown) centred at 4.3 $\mu$m for $CO_2$.

The source also comprises a reference detector **110** that receives a part of the source's radiation (arrow **165**) and records its intensity. It is not required that the spectral responsivity of the reference detector matches that of the infrared detector **130** and, indeed, the responsivity of the reference detector may be limited to a different part of the spectrum without overlap with the measurement made in the infrared detector **130**. For example, the infrared detector may be responsive to wavelengths at $\lambda$ = 4.3 $\mu$m while the reference detector is responsive to shorter wavelengths. Possibly, the reference detector **110** may be a silicon photodetector with a peak sensitivity at $\lambda$ = 0.8 $\mu$m and essentially no responsivity below $\lambda$ = 1.1 $\mu$m or a germanium photodetector that can detect radiation up to $\lambda$ = 1.7 $\mu$m, or a InGaAs photodetector with a responsivity extending to $\lambda$ = 2.5 $\mu$m, or any other suitable radiation detector. Optionally, but not necessarily, a filter **138** may be used to reduce the band of the spectrum reaching the reference detector. The output of the reference detector is a sensitive indication of the temperature of the MEMS micro-plate and of the intensity of the radiation at all the wavelength in the spectrum, including the measurement wavelength. It can be used to stabilise the temperature, or in any other way.

**Figure 2** is a similar arrangement where a concentration of $CO_2$ is measured by photoacoustic principles. The gas sample is contained in a cell **125** that, preferably, is tuned to present an acoustic resonance at a predetermined frequency. The source **100** emits an IR radiation modulated in amplitude at the same predetermined frequency, and the filter **124** select a specific wavelength that is selectively absorbed by $CO_2$, or any other gas that is searched. An acoustic oscillation in the cell is established, the amplitude being proportional to the intensity of radiation at the absorption wavelength and to the concentration of $CO_2$. This oscillation is measured by the microphone **147** and processed by lock-in amplifier **144** or by any other suitable circuit and produces a concentration signal. As in the previous examples, the reference detector **110** is used to stabilise the emission.

The arrangement of figures 1 and 2 illustrate measurement methods in which the thermal radiation reaching the reference detector does not interact with the sample. This is not an essential feature of the invention, however, and the invention includes also variants as depicted in **figure 3** in which the reference sensor **110** is placed after the sample cell **120** and receives radiation that has interacted with the sample. Preferably, filters **138, 144** select different spectral bands for the measurement detector **130** and the reference detector **110** used to stabilise the emission. If the responsivity of the reference detector **110** and that of the infrared detector **130** are different, one or both filters **144, 138** may be omitted, however.

With reference to **figures 4** and **5,** the source of the invention has a plate **30** that is designed to be heated resistively to an incandescent state. The heating action is obtained by connecting the source to a power source such that the plate, and especially the support arms **342, 344** carry a suitable current. Importantly, since the cross section of the arms is considerably less than that of the plate itself, the heating power is localised in the arms, mostly, and the heat is conducted from the arms to the plate **30,** whose temperature in operation is sensibly uniform.

Preferably the plate **30** and the arms **342, 344** are fabricated out of a conductive and refractory material that can stand the temperature at which the plate is designed to operate. In most cases of practical interest, the operating temperature will be above 800 K, often above 2000 K. Materials capable of operating at these temperatures include refractory metals such as tungsten, tantalum, molybdenum, niobium, rhenium, conducting refractory ceramics such as tungsten carbide, hafnium carbide, tantalum carbide, Hafnium tantalum carbide, graphite, and many other.

The source of the invention comprises in general a housing, not represented, to protect the incandescent emitter. Most materials, including tungsten, react readily with atmospheric gases ($O_2$, $N_2$, $CO_2$) at high temperature. To prevent this, the emitter may be in an evacuated space, which also minimise thermal losses. The housing could also be filled with a low-pressure gas composition based on an inert gas, such as argon or xenon.

In the depicted embodiment, the plate is suspended above a reflector **20** by the arms **342, 344,** such that the back surface of the plate is facing the reflector **20.** This optional reflector may comprise a layer of a substance that reflects most of the IR or visible radiation emitted by the plate **30.** Gold-metallised mirrors have been used with good success in this application. The reflector is especially advantageous when the source is meant to operate at very high temperatures but may be dispensed with at lower temperatures, or when the radiation of interest is at longer wavelengths for example at wavelengths shorter than three microns.

Preferably, a certain degree of elasticity and/or compliance in the arms **342, 344** provides an elastic buffer against the expansion and contraction over the large temperature changes that the device must withstand and increases the useful life of the device. In figure 4, the flexibility is provided by slender arms **342** that have an arcuate form and meet the plate **30** at an angle, rather than radially. When heated to the operating temperature, thermal expansion is absorbed by a deformation of the arms **342** and a rotation of the whole plate **30** around the central axis.

**Figure 5** presents a different structure that allows to achieve the same goal. Here compliant structures on the arms **344** take care of the thermal expansion. Many other flexible and compliant structures are possible and included in the scope of the invention. The examples shown have arms that are co-planar with the plate **30,** which eases the fabrication, but this is not a necessary limitation.

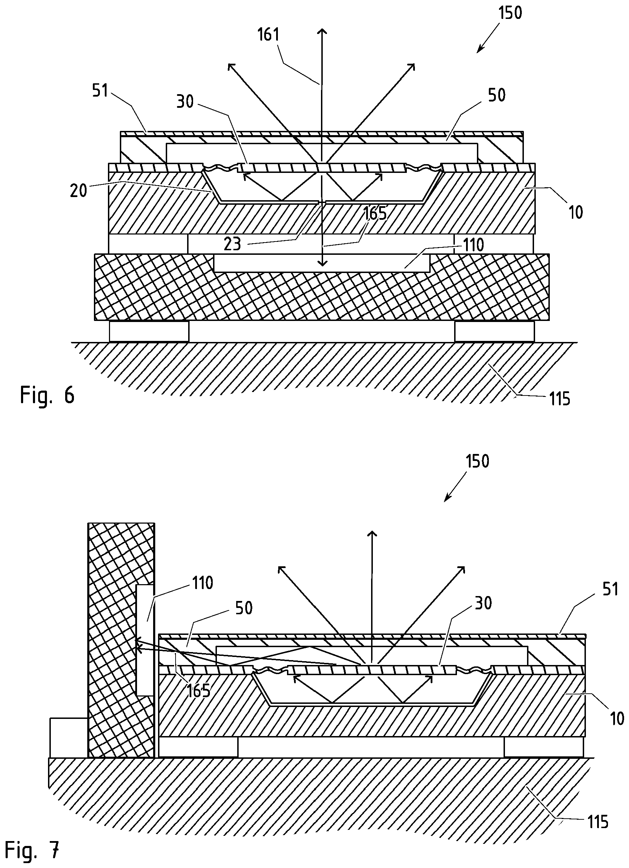

**Figure 6** show, in cross section, a possible arrangement of a MEMS thermal radiation source **150** according to the invention. The hot plate **30** is suspended and heated by the elastic arms and is placed above a reflector **20** that mirrors most of the radiation emitted by the lower face of the plate back on the emitter plate **30.** The infrared radiation emitted by the upper face of the plate goes across the window **50,** the optional filter **51,** and is directed towards a sample or used in any other way.

The reflector **20** allows a small but significant amount of radiation **165** to pass across and reach the underlying photodetector **110.** This may be obtained by a pinhole **23** in the metallised coating of the reflector, or in any other way. In the example, the MEMS emitter is bonded directly above the photodiode, which is soldered on a PCB **115,** but the invention also includes embodiment that have the source and the photodiode soldered on opposite sides of a thin PCB. or be contained in a same package.

In this example, the radiation **165** reaches the reference photodetector **110** through the substrate **10,** which is transmissive, or partially transmissive to the reference wavelength. In alternative realizations, the substrate **10** may have an opening to let the reference radiation **165** through. The lid **50** is transmissive to the wavelength or band of interest **161,** but not necessarily to the reference wavelength. In an example optimised for $CO_2$ detection, the lid **50** is silicon that is transmissive to radiation at 4300 nm, which is the wavelength of interest, while the reference measurement is centred at 900 nm, which cannot pass through silicon, but can cross the glass substrate **10.**

The source **150** of the invention may include a control circuit and/or a controlled power supply heating the source in a controlled manner such that the temperature and emission of the source are stabilised, as it will be explained later. These elements may also be external, however, and are not represented.

**Figure 7** shows another variant of the invention that uses stray radiation escaping the source from the edge to illuminate the reference detector **110.** The radiation reaching the reference detector 110 comes from the upper or lower surface of the plate **30** directly, or through reflections on the lid **50** and/or any other structure in the source. As in the example of figure 6, the lid **50** does not need to be transparent to the reference radiation. In some cases, the source may include a narrowband filter (not shown) the wavelength of interest from the broadband thermal emission of the plate. This filter is in general not transmissive to the reference radiation.

In this example, as well as in the previous one, the source and the photodiode are soldered on a PCB, but other dispositions and packaging may be envisioned without leaving the scope of the invention.

In another embodiment, not represented in the drawings, a reference detector could be placed far from the emitter, possibly close to the main infrared detector.

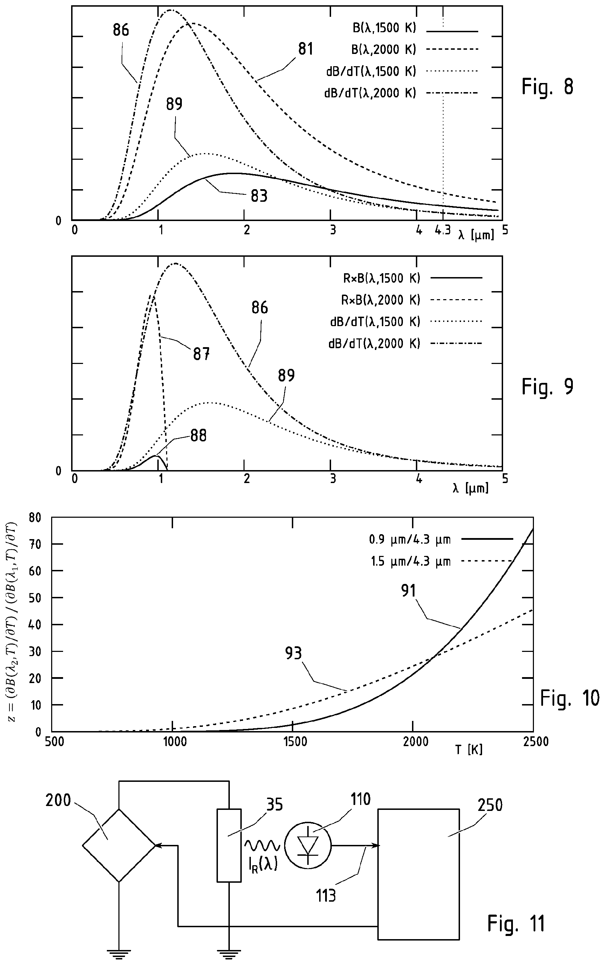

**Figure 8** is a plot of the spectral radiance of an ideal black body, $B(\lambda, T)$, which is a good approximation of the emission of MEMS hot plate source, at 2000 K **(81)** and 1500 K **(83).** The wavelength $\lambda = 4.3$ μm that is most used for $CO_2$ measurements is specially marked in the plot. The mathematical expression of $B(\lambda, T)$ is the Planck's equation:

$$B(\lambda, T) = \frac{2hc^2}{\lambda^5} \frac{1}{e^{\frac{hc}{\lambda k_B T}} - 1}$$

where $h$ denotes the Planck's constant, $c$ the speed of light and $k_B$ the Boltzmann constant and $B(\lambda, T)$ is the spectral radiance (energy per unit area per unit solid angle) of an ideal blackbody. The radiance of the sources of the invention can be described roughly by this formula, with a correcting factor $\varepsilon(\lambda, T)$ that, under reasonable hypothesis, can be considered as a constant value.

The derivative $\partial B(\lambda, T)/\partial T$ of the Planck's distribution is expressed by

$$\partial B(\lambda, T)/\partial T = \frac{2h^2 c^3}{\lambda^6 k_B T^2} \frac{e^{\frac{hc}{\lambda k_B T}}}{\left(e^{\frac{hc}{\lambda k_B T}} - 1\right)^2}$$

Curves **86, 89** plot $\partial B(\lambda, T)/\partial T$ as a function of the wavelength at T = 2000 K and T = 1500 K. When the temperature of the source changes by a small amount $\Delta T$, the change in the spectral radiance can be expressed by a first order Taylor approximation

$$B(\lambda, T + \Delta T) = B(\lambda, T) + \frac{\partial B}{\partial T} \Delta T$$

Regions in the spectrum where the derivative $\partial B(\lambda, T)/\partial T$ is higher exhibit a stronger dependence from the temperature T of the source, in the sense that any fluctuation in the temperature will yield a change in the spectral intensity larger than in other regions of the spectrum where $\partial B(\lambda, T)/\partial T$ is lower. Accordingly, if one manages to stabilise the spectral intensity in a band of the spectrum where $\partial B(\lambda, T)/\partial T$ is close to its maximum, the intensity will be even more stable everywhere in the spectrum.

**Figure 9** plots the product $R(\lambda) B(\lambda, T)$ where $R(\lambda)$ denotes the responsivity of a Silicon photodiode for T=2000 K (curve **87**) and T=1500 K **(88).** Curves **86, 89** are the derivative $\partial B(\lambda, T)/\partial T$ as in the previous figure. It appears that the reference signal available at the photodiode's output is dominated by the radiation in the interval 850 nm-1050 nm. The signal provided by a Silicon photodiode is much more strongly dependent on the source's temperature than the output of an infrared detector, because the response of the photodiode is closer to the maximum of $\partial B(\lambda, T)/\partial T$. The effect is particularly remarkable at T $\approx$ 2000/2500 K, where the match between the curves is optimal, but is present in a broad range of temperatures.

The ratio of derivatives

$$z = \frac{\partial B(\lambda_2, T)}{\partial T} \Big/ \frac{\partial B(\lambda_1, T)}{\partial T}$$

is an expression of the temperature sensitivity of the intensity of a thermal radiation source at a given wavelength $\lambda_2$ relative to the temperature sensitivity of the intensity of the same source at another wavelength $\lambda_1$, It can be used to understand the roles of the temperature and of the reference wavelength $\lambda_2$ when controlling a measurement at wavelength $\lambda_1$.

Figure **10** plots the temperature sensitivity z as a function of the temperature. The wavelengths $\lambda_1$ and $\lambda_2$ are chosen to represent examples of practical interest: $\lambda_1$ = 4.3 $\mu m$ is the wavelength of a prominent peak in the absorption spectrum of $CO_2$. Curve 91 is relative to a typical Silicon detector with a responsivity centred around $\lambda_2$ = 0.9 $\mu m$, while curve 93 may apply to photodetector with a responsivity centred around $\lambda_2$ = 1.5 $\mu m$ for example a Germanium photodiode or an InAsSb or InGaAs/InP photodiode. When a thermal emitter is used to measure $CO_2$ at $\lambda_1$ = 4.3 $\mu m$, it is advantageous to stabilize the source based on the spectral intensity at shorter wavelengths, which are more sensitive to temperature fluctuations. When the temperature of the source is about T = 2000 K, Silicon photodiodes have a responsivity centred around $\lambda_2$ = 0.9 $\mu m$ and are especially suitable. At lower temperatures, other photodiodes capable of measuring the spectral intensity at longer wavelengths may be advantageous. The wavelength $\lambda_1$ = 4.3 $\mu m$ has been chosen in this disclosure because it is relevant to the measurement of $CO_2$ that is a use case of special interest, but it does not limit the invention, which is applicable to any other molecular transition or significant process in the infrared spectrum of radiation.

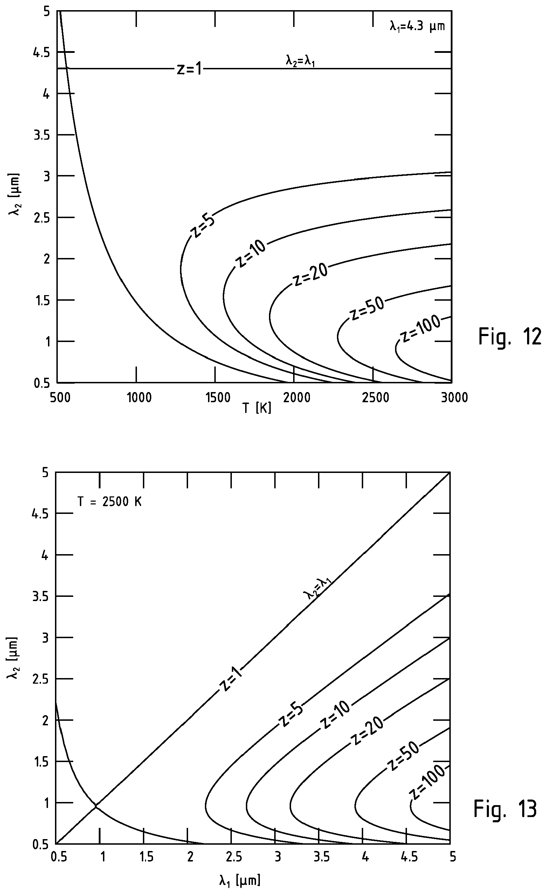

**Figure 12** is a two-dimensional contour plot of the relative temperature sensitivity $z = (\partial B(\lambda_2, T)/\partial T) / (\partial B(\lambda_1, T)/\partial T)$ as a function of the temperature T and the reference wavelength $\lambda_2$ with $\lambda_1$ = 4.3 $\mu m$. **Figure 13** is a contour plot of the same sensitivity z as a function of the measurement wavelength $\lambda_1$ and of the reference wavelength $\lambda_2$ with T = 2500 K. The reference wavelength and the temperature can be chosen to achieve high sensitivity, for example z > 5, z > 10, z > 20, or even z > 50.

In many significant use cases, thermal sources like those of the invention are used for their ability to provide radiation in a desired emission band situated, according to the needs, between $\lambda$ = 2 $\mu$m and $\lambda$ = 25 $\mu$m, preferably between $\lambda$ = 2 $\mu$m and $\lambda$ = 12 $\mu$m. This region, for example, includes the fundamental vibration modes of many chemical substance or functional groups, and is especially important in spectroscopic measurements. The same is true, however, for many other useful applications of the invention, for example in gas sensing, imaging, and other. The inventors have found that, by matching the responsivity of the reference detector with the spectral region where the Planck's distribution exhibits a higher temperature sensitivity, the stability of the source at the wavelength of interest is improved. A reference measurement at a shorter wavelength provides, in many important use cases, a stronger temperature sensitivity, more signal, less thermal and electronic noise than a measurement at the interaction wavelength. Moreover, the intensity at shorter wavelength can be measured with Silicon, Germanium InGaAs, InAsSb photodiodes that are cheaper, smaller, and exhibit less noise.

**Figure 11** is a highly simplified representation of a control circuit that could be used to stabilise a radiation source according to the invention. The source **200** is a controlled voltage source that is connected to the heaters **35,** represented as a resistive equivalent load. The photodiode **110** receives a part of the thermal emission $I_R(\lambda)$ from the radiation source and generates a reference signal **113** for the electronic controller **250** which in turn controls the source **200** such that the reference signal **113** is constant. This result can be achieved by a proportional linear controller, a PID controller, or in any other suitable manner.

The level of the reference signal **113** is linked to the temperature of the plate **30** of the source in a manner that depends on the spectral responsivity of the reference detector **110** and the on the transmissivity of any intervening filters and media, if present. This relationship can be better understood referring to **Figure 10.**

In particular, for the same change in the emitter's surface temperature, the reference signal **113** may change, in proportion to its nominal value, five, ten or even by a higher ratio, more than the spectral radiance in the emission band; thus, by using different wavelength for the emission band and the reference measurement, and choosing the reference detector suitably, the spectral radiance of the emitted signal can be stabilised with high accuracy.

The stability of the source is of paramount importance in many applications and has a direct influence of the measurement that can be done when the source of the invention is used, for example, in spectroscopic measurements.

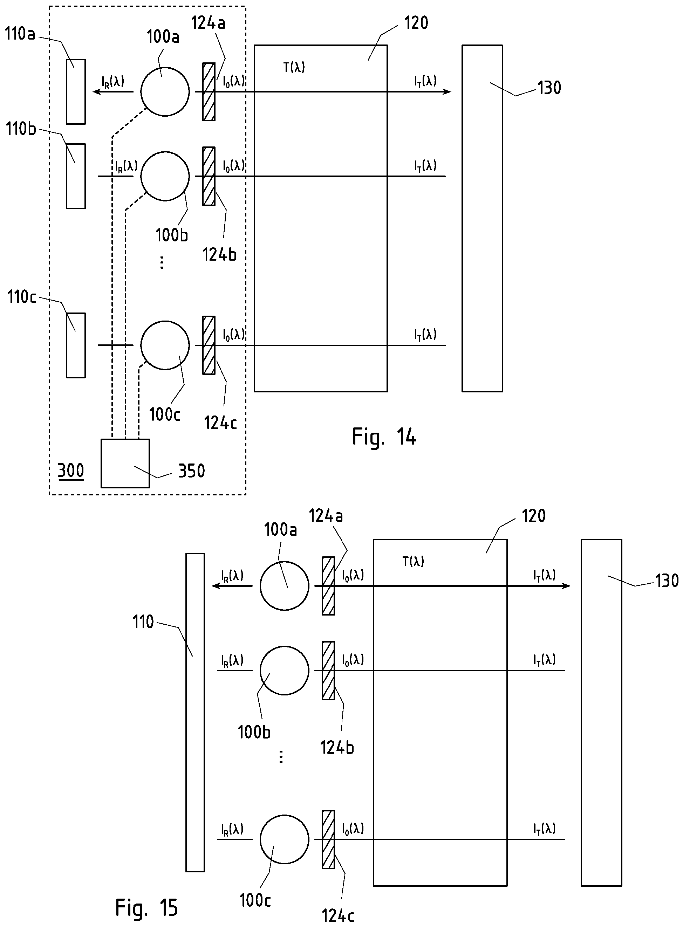

**Figure 14** illustrates a variant of the invention that is especially suitable for spectroscopic measurements. This device includes a plurality of thermal sources **110a-110c** that may present different features. For example, sources **110a-110c** may have emitter plates of different sizes or be configured to operate at different temperatures such that the spectra and the intensity of the emitted radiation are inherently variable between the sources. In variant, however, the sources **110a-c** may be identical, but driven at different voltages, or with different duty cycles, or modulated in different manners such that their emission differs. In many cases, the individual thermal sources **110a-110c** are identical in structure and nominal power, the filters **124a-c** selecting different band of the emission spectrum. Importantly, the invention implements a reference measurement thanks to which the emission of the sources is controlled such that they do not drift with respect to each other in any way.

The sources are individually addressable by the programmable power source **350** in such a way that their emissions can be controlled and multiplexed in time. Part of the radiation is received by the reference detectors **110a-110c** that are used to stabilise the output of each of the sources, as disclosed above. The emitter may include individual filters **124a-c,** or other means for selecting the emission band for each of the individual source. The individual filters may be replaced, for example, by a single graded filter or by a dispersive element such as a grating or a prism. The detector **130** receives the radiation that, starting from any of the sources, has interacted in the sample cell **120** and could provide a single output signal that is the superposition of all these individual components; however, in preferred embodiments, the sources **100a-c** are driven by the source **350** in time-division multiplexed fashion, such that the contribution of the individual sources can be resolved by analysing the output of the detector **130** synchronously with the source **350.**

**Figure 15** shows a variation of the multi-source emitter where the individual reference detectors **110a-c** are replaced by a common reference detector **110**. As disclosed above, the source **350** (not represented in this figure) drives the source in time-division multiplexed fashion such that the reference signals for each individual source can be resolved and each source is individually controllable and stabilised.

**Reference symbols in the figures**

| 10 | substrate |
|---|---|
| 20 | reflector |
| 23 | pinhole |
| 30 | micro hot plate |
| 32 | contact, bonding pad |
| 35 | heater's resistance |
| 50 | window |
| 51 | filter layer |
| 81 | Planck distribution B(T, λ): T=2000 K |
| 83 | Planck distribution B(T, λ): T=1500 K |
| 86 | derivative $\partial B(T, \lambda)/\partial T$: T=2000 K |
| 87 | product, 2000 K |
| 88 | product, 1500 K |
| 89 | derivative $\partial B(T, \lambda)/\partial T$: T= 1500 K |
| 91 | $\partial B(T, 0.9\ \mu m)/\partial T$ / $\partial B(T, 4.3\ \mu m)/\partial T$ |
| 93 | $\partial B(T, 1.5\ \mu m)/\partial T$ / $\partial B(T, 4.3\ \mu m)/\partial T$ |
| 100 | MEMS source |
| 100a-c | MEMS source |
| 110a-c | reference detector |
| 110 | reference detector, silicon photodiode |
| 113 | reference signal |
| 115 | PCB |
| 120 | sample cell |
| 124 | filter |
| 124a-c | filter |
| 125 | sample cell |
| 130 | IR photodetector |
| 138 | filter |
| 144 | lock-in detector |
| 147 | microphone |
| 150 | MEMS thermal radiation source |
| 161 | emitted radiation to the sample cell |
| 162 | radiation emerging from the sample cell |
| 165 | fraction of the emitted radiation to the reference detector |
| 200 | controlled voltage source |
| 250 | controller |
| 300 | multi-emitter source |
| 342 | arm |
| 344 | flexure |
| 350 | multiplexer |

**Claims**

1. A thermal radiation source (150) comprising a plate (30) and one heater or a plurality of heaters (342, 344) configured to heat the plate (30) to an emission temperature such that an emitted radiation (161) is emitted from the plate, **characterised by** a reference radiation detector (110) receiving a part (165) of the emitted radiation and providing a reference intensity signal indicative of an intensity of the emitted radiation (161).

2. The radiation source (150) of the preceding claim, wherein the reference radiation detector (110) has a sensitivity limited to wavelengths shorter than a peak wavelength of the emission spectrum.

3. The radiation source (150) of any one of the preceding claims, wherein the plate (30) is a MEMS device enclosed in a package with a window (50) for the emitted radiation (161).

4. The radiation source (150) of any one of the preceding claims, the plate (30) being suspended and held in position by the heater or heaters.

5. The radiation source (150) of any one of the preceding claims, wherein the plate (30) has an upper surface facing a window (50) of the package and a lower surface facing a reflector (20) reflecting the radiation emitted from the lower surface towards the plate (30) and transmitting a fraction of the radiation emitted from the lower surface towards the reference detector (110).

6. The radiation source (150) of any one of the claims 1-3, wherein the plate faces a window (50) of the package, and the reference detector (110) is placed to receive a fraction of the thermal radiation scattered towards an edge of the window.

7. The radiation source of any one of the preceding claims, the reference detector (110) having a sensitivity limited to the range $\lambda < 1800$ nm, preferably the reference detector being a silicon photodiode or a germanium photodiode, or an InGaAs photodiode, or an InAsSb or an InGaAs/InP photodiode.

8. The radiation source of any one of the preceding claims, comprising a control circuit (250) configured to stabilise the reference intensity signal to a predetermined level by controlling a heating power, thereby stabilising the emission temperature.

9. A spectroscopic system for analysing a sample with infrared radiation comprising a radiation source according to the preceding claim.

10. The spectroscopic system of the preceding claim comprising a plurality of radiation sources (110a-110c) according to any one of the preceding claims, and a programmable power source (350) for addressing each radiation source individually.

11. The spectroscopic system of the preceding claim, wherein the radiation sources are configured to send a part (165) of the emitted radiation to a common reference detector (110) providing a reference intensity signal indicative of an intensity of the emitted radiation.

12. The spectroscopic system of any one of claims 9-10, comprising an array of filters or a single graded filter or a dispersive element for selecting spectral bands of the radiation emitted by the radiation sources that is directed to the sample.

13. A method of providing infrared radiation in a predefined emission band of the spectrum comprising: providing a thermal radiation source (150), heating a plate (30) of the thermal radiation source (150) at an emission temperature such that an emitting surface of the plate emits infrared radiation in the emission band, **characterised in that** part of the thermal radiation is directed to a reference radiation detector (110) responsive to wavelengths in a reference band different from the emission band that provides a reference signal (113) **and in that** the reference signal is used to control a heating power applied to the plate (30) such that a spectral radiance of the radiation in the emission band is stabilised.

14. The method of the preceding claim, wherein a ratio (z) of the temperature sensitivity of the intensity of the thermal radiation source at a first wavelength in the reference band above the temperature sensitivity of the intensity of the thermal radiation source at a second wavelength in the emission band is larger than, five, more preferably larger than ten, more preferably larger than twenty.

15. The method of any one of claims 12-13, comprising determining a desired characteristic of a sample (120, 125) based on an interaction of the sample with the radiation in the emission band and measuring an intensity of the radiation in the emission band after the interaction with the sample with a photodetector (130) having a responsivity different from that of the reference radiation detector, or comprising an active material different from an active material of the reference radiation detector.

16. The method of the preceding claim, wherein the part of the thermal radiation reaching the reference detector does not interact with the sample (120, 125).

17. The method of any one of claims 12-15, wherein the reference signal has a maximum spectral responsivity at a wavelength outside the interaction band, or shorter than wavelengths in the interaction band.

18. The method of the preceding claim, wherein the emission temperature is below 2500 K and the reference detector has a sensitivity limited to the range $\lambda < 1800$ nm, and/or the reference detector (110) being a silicon photodiode, or a Germanium photodiode, or an InGaAs photodiode or a InGaAs/InP or an InAsSb photodiode, or a PbS detector or a PbSe detector.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

**Europäisches Patentamt**
**European Patent Office**
**Office européen des brevets**

# EUROPEAN SEARCH REPORT

**Application Number**

EP 24 18 9894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/214272 A1 (GALISULTANOV AYRAT [US]) 7 July 2022 (2022-07-07) | 1-4,6-9, 13,14,18 | INV. G01J3/02 |
| Y | * figures 1B,1C,2 * * paragraphs [0030], [0061], [0062] - [0067], [0084], [0085], [0090], [0091] * | 5,6, 10-12, 15-17 | G01J3/10 G01J3/42 |
| Y | US 2003/041649 A1 (GEORGE THOMAS [US] ET AL) 6 March 2003 (2003-03-06) * figure 6 * * paragraph [0043] * | 5 | |
| Y | US 11 920 979 B2 (VIAVI SOLUTIONS INC [US]) 5 March 2024 (2024-03-05) * figures 1,2,3A,3B * | 6 | |
| Y | US 2018/335345 A1 (GJESSING JO [NO] ET AL) 22 November 2018 (2018-11-22) * figure 8 * * paragraph [0035] * | 10-12 | |
| Y | CN 114 324 225 B (UNIV SUN YAT SEN) 2 June 2023 (2023-06-02) * figure 1 * | 10-12 | TECHNICAL FIELDS SEARCHED (IPC) G01J G01N |
| Y | US 2006/060788 A1 (UCHIDA KOJI [JP] ET AL) 23 March 2006 (2006-03-23) * figures 3-5 * | 12 | |
| Y | US 9 851 250 B1 (EMADI ARVIN [US] ET AL) 26 December 2017 (2017-12-26) * column 5, line 3 - line 48 * | 15-17 | |

The present search report has been drawn up for all claims

| Place of search | Date of completion of the search | Examiner |
|---|---|---|
| Munich | 17 December 2024 | Jacquin, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 9894

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2024

| Patent document cited in search report | | Publication date | Patent family member(s) | | Publication date |
|---|---|---|---|---|---|
| US 2022214272 | A1 | 07-07-2022 | EP | 3973259 A1 | 30-03-2022 |
| | | | FR | 3096461 A1 | 27-11-2020 |
| | | | US | 2022214272 A1 | 07-07-2022 |
| | | | WO | 2020234404 A1 | 26-11-2020 |
| US 2003041649 | A1 | 06-03-2003 | NONE | | |
| US 11920979 | B2 | 05-03-2024 | CN | 114341600 A | 12-04-2022 |
| | | | EP | 3994431 A1 | 11-05-2022 |
| | | | EP | 4365576 A2 | 08-05-2024 |
| | | | KR | 20220047805 A | 19-04-2022 |
| | | | TW | 202119001 A | 16-05-2021 |
| | | | TW | 202334616 A | 01-09-2023 |
| | | | US | 2021063241 A1 | 04-03-2021 |
| | | | US | 2022187124 A1 | 16-06-2022 |
| | | | US | 2024183710 A1 | 06-06-2024 |
| | | | WO | 2021042120 A1 | 04-03-2021 |
| US 2018335345 | A1 | 22-11-2018 | EP | 3359484 A2 | 15-08-2018 |
| | | | US | 2018335345 A1 | 22-11-2018 |
| | | | WO | 2017060264 A2 | 13-04-2017 |
| CN 114324225 | B | 02-06-2023 | NONE | | |
| US 2006060788 | A1 | 23-03-2006 | DE | 102005036262 A1 | 23-03-2006 |
| | | | JP | 2006071601 A | 16-03-2006 |
| | | | US | 2006060788 A1 | 23-03-2006 |
| US 9851250 | B1 | 26-12-2017 | US | 9851250 B1 | 26-12-2017 |
| | | | US | 10168211 B1 | 01-01-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2021144463 A